# EUROPÄISCHE PATENTANMELDUNG

(11) **EP 0 917 306 A2**
(43) Veröffentlichungstag der Anmeldung: **19.05.1999**
(21) Anmeldenummer: 98120578.4
(22) Anmeldetag: 30.10.1998
(51) Int. Cl.: H04B 7/26

(54) **Verfahren zum Steuern der Sende- und Empfangsaktivitäten eines lokalen Radiokommunikationssystems**

(30) Priorität: 18.11.1997 DE 19751073
(71) Anmelder: NOKIA MOBILE PHONES LTD., 02150 Espoo (FI)
(72) Erfinder: Joeressen, Olaf Johannes, 40235 Düsseldorf (DE); Schneider, Gregor, 44787 Bochum (DE)
(74) Vertreter: TER MEER STEINMEISTER & PARTNER GbR

(57) **Zusammenfassung**

Die vorliegende Erfindung betrifft ein Verfahren zum Steuern der Sende- und Empfangsaktivitäten eines lokalen Radiokommunikationssystems mit einer Haupteinheit (MU) und wenigstens einer Endeinheit (SU). Um bei diesem lokalen Radiokommunikationssystem, das mit geringer Leistung arbeitet, gegenseitige Störungen mit einem zugeordneten Referenzsystem, das mit relativ hoher Leistung arbeitet, zu verhindern, ist vorgesehen, daß in der Haupteinheit (MU) eine Zeitbasis für eine Kommunikation mit der bzw. den Endeinheiten (SU) in Abhängigkeit von der Zeitbasis des Referenzsystems (12) festgelegt wird und daß jeder Endeinheit (SU) die für sie auf der Grundlage der Zeitbasis festgelegte Rahmenlänge (t_{Fr}) mitgeteilt wird.

## Beschreibung

Die Erfindung betrifft ein Verfahren zum Steuern der Sende- und Empfangsaktivitäten eines lokalen Radiokommunikationssystems und insbesondere zum Steuern der Sende- und Empfangsaktivitäten eines digitalen Hochfrequenz-Radiokommunikationssystems mit einer Master- oder Haupteinheit und einem oder mehreren untergeordneten Slave- oder Endeinheiten, bei dem die Radiokommunikation zwischen der Haupteinheit und den Endeinheiten mit geringer Leistung erfolgt.

Bei einem derartigen System erfolgt die Radiokommunikation der Haupteinheit mit den Endeinheiten im Zeitmultiplexbetrieb, während die Empfangs- und Sendeaktivitäten der Endeinheiten zeitversetzt durchgeführt werden. Zweckmäßigerweise sind dabei alle Sende- und Empfangsaktivitäten in eine Rahmenstruktur eingebunden. Ein Rahmen ist dabei ein Zeitabschnitt mit einer bestimmten Länge, der in sogenannte Zeitschlitze unterteilt ist, in denen jeweils ein Informationspaket, ein sogenannter Burst gesendet oder empfangen wird.

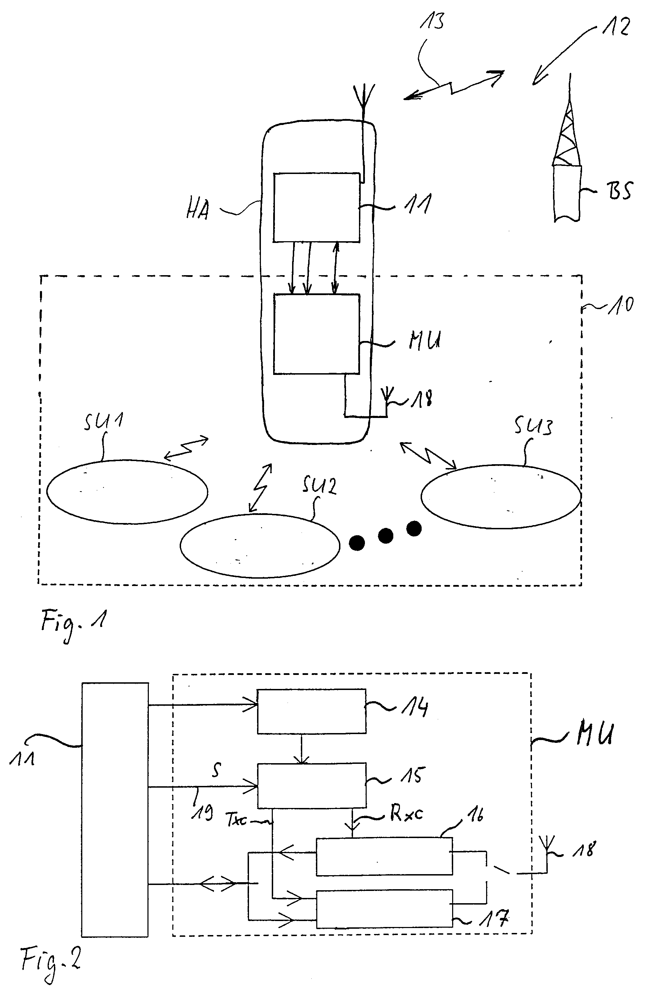

Figur 1 zeigt rein schematisch ein Beispiel für ein lokales Radiokommunikationssystem 10 mit einer Haupteinheit MU und einer Vielzahl von Endeinheiten SU1, SU2, SU3. Die Haupteinheit 10 ist zusammen mit einem Endgerät 11 eines zellularen Mobilfunksystems 12 in einem Handapparat HA eines Mobiltelefons oder in einem Autotelephon kombiniert. Dabei können Probleme auftreten, wenn das Endgerät 11 mit relativ hoher Leistung von beispielsweise 2 Watt oder mehr über einen entsprechenden Kanal 13 mit einer Basisstation BS des Mobilfunksystems 12 kommuniziert und gleichzeitig die Haupteinheit MU des lokalen Radiokommunikationssystems 10 Daten und Informationen austauschen muß, da sich die Sende- und Empfangsaktivitäten der beiden System gegenseitig stören, wenn diese nicht zeitlich aufeinander abgestimmt sind.

Berücksichtigt man hierbei, daß das lokale Radiokommunikationssystem mit einer Reichweite von nicht wesentlich mehr als zehn Metern beispielsweise nur mit einer Leistung von einem Milliwatt sendet, so können während des Sendebetriebs des Endgeräts 11 bein Empfang von Informationen im lokalen Radiokommunikationssystem Probleme auftreten, sofern keine teuren hardwaretechnischen Abschirmmaßnahmen vorgesehen werden.

Da hierbei die Steuerprogramme für die beiden Systeme zwei unterschiedliche Zeitskalen handhaben müssen, wird die Spitzen-Rechenlast des Gesamtgeräts im Handapparat HA erhöht, da die Rechenaktivitäten der beiden System sich gegeneinander verschieben und somit gleichzeitig stattfinden können. Insbesondere kann es vorkommen, daß Aktivitäten in beiden Systemen, also im lokalen Radiokommunikationssystem 10und in dem hier beispielsweise angeführten zellularen Mobilfunksystem 12, wirklich gleichzeitig stattfinden müssen, so daß für diesen Fall vollständig unabhängige Hardware-Einrichtungen, insbesondere Schnittstellen, zur Verfügung gestellt werden müssen, da eine für beide Systeme verwendete Schnittstelle nicht beide Systeme unabhängig steuern kann.

Wegen der fehlenden Zeitbeziehung zwischen den Aktivitäten erfordern mögliche gegenseitige Störungen teure Abschirmungen und schaltungstechnische Bauteile, um die technischen Spezifikationen, insbesondere die Zulassungsbestimmungen, trotzdem zu erfüllen. Ferner ist auch der Gesamtleistungsverbrauch zu berücksichtigen, wenn sowohl das Endgerät 11 als auch die Haupteinheit MU in einem Handapparat HA von einer gemeinsamen Energiequelle versorgt werden. Wenn für beide Systeme ein Schlafmodus vorgesehen ist, um Energie zu sparen, müssen auch zwei verschiedene Schlafzyklen gesteuert werden, was zur Folge hat, daß die Steuerung für längere Zeit aktiv ist, als es in einem Einzelsystem erforderlich wäre, so daß hierdurch der Leistungsverbrauch ebenfalls erhöht wird.

Der Erfindung liegt die Aufgabe zugrunde, ein Verfahren zum Steuern der Sende- und Empfangsaktivitäten eines lokalen Radiokommunikationssystems bereitzustellen, das es ermöglicht die zeitliche Abstimmung der Kommunikationsaktivitäten flexibel an die jeweiligen Erfordernisse anzupassen.

Diese Aufgabe wird durch das Verfahren nach Anspruch 1 gelöst.

Erfindungsgemäß ist also vorgesehen, daß in der Haupteinheit jeweils eine Zeitbasis für die Kommunikation mit den Endeinheiten festgelegt wird und jeder Endeinheit die für sie auf der Grundlage der Zeitbasis festgelegte Rahmenlänge mitgeteilt wird. Hierdurch wird es möglich die für die Festlegung der jeweiligen Rahmenzeiten erforderliche Zeitbasis je nach den Erfordernissen zu variieren, so daß sich insbesondere beim Einsatz des erfindungsgemäßen Radiokommunikationssystems zusammen mit einem weiteren, im folgenden als Referenzsystem bezeichneten System, beispielsweise einem zellularen Mobilfunksystem, Überschneidungen der Kommunikationsaktivitäten einfach ausschließen lassen.

Besonders vorteilhaft ist es dabei, wenn zur Anpassung der Sende- und Empfangsaktivitäten des Radiokommunikationssystems an ein Referenzsystem die Zeitbasis des lokalen Radiokommunikationssystems von der Zeitbasis des Referenzsystems abgeleitet wird, wobei zweckmäßigerweise vorgesehen ist, daß die Haupteinheit einem Endgerät eines Referenzsystems zugeordnet ist, und daß die Zeitbasis der Haupteinheit mit der Sendeaktivität des Endgeräts korreliert.

Auf diese Weise lassen sich gemeinsame Aktivitäten von lokalem Radiokommunikationssystem und Referenzsystem besonders zuverlässig ausschließen, da im Falle einer Änderung der Zeitbasis oder einer Verschiebung der Sendeaktivitäten des Referenzsystems, wie sie beispielsweise in einem zellularen System auftreten kann, wenn ein Endgerät von einer Zelle in die nächste wechselt, die Zeitbasis im lokalen Radiokommunikationssystem in entsprechender Weise angepaßt wird.

Besonders einfach läßt sich die zeitliche Steuerung ausführen, wenn eine Rahmenzeit des Referenzsystems als Zeitbasis für das lokale Radiokommunikationssystem verwendet wird, und wenn die Rahmenzeit für jede Endeinheit in einem ganzzahligen Verhältnis zur Zeitbasis steht. Hierdurch wird es auch ermöglicht, für verschiedene Endeinheiten des lokalen Radiokommunikationssystems verschiedene Rahmenzeiten zu wählen, so daß für Endeinheiten, mit denen nur eine relativ geringe Datenmenge ausgetauscht werden muß, eine längere Rahmenzeit vorgesehen werden kann, während für ein hohes Datenaufkommen eine kurze Rahmenzeit gewählt wird.

Besonders vorteilhaft ist es ferner, wenn in jeder Endeinheit die Rahmenzeit jeweils vom Beginn eines empfangenen Informationspakets an gemessen wird, wobei während eines normalen Kommunikationsbetriebs jede Endeinheit jeweils am Ende eines Rahmens in Empfangsbereitschaft übergeht und dann so lange in Empfangsbereitschaft bleibt, bis sie entweder ein für sie bestimmtes Informationspaket empfängt oder bis eine für die maximale Dauer der Empfangsbereitschaft vorgegebene Zeit abgelaufen ist.

Auf diese Weise lassen sich Verschiebungen der Zeitbasis, wie sie beim sogenannten Handover in einem zellularen Mobilfunksystem auftreten können, besonders einfach handhaben, da, wenn infolge eines Handovers der zeitliche Abstand zwischen zwei aufeinanderfolgenden Sendeaktivitäten des Endgeräts größer als die Rahmenzeit wird, die Endeinheit des lokalen Radiokommunikationssystems einfach so lange empfangsbereit wartet, bis sie wieder ein für sie bestimmtes Informationspaket empfängt.

Besonders vorteilhaft ist es dabei, wenn die maximale Empfangsbereitschaftszeit nicht als fester Wert vorgegeben wird, sondern In Abhängigkeit von der Rahmenzeit des Referenzsystems festlegbar ist.

Um die Zuverlässigkeit der Kommunikation zwischen der Haupteinheit und den Endeinheiten im lokalen Radiokommunikationssystem zu vergrößern, ist ferner vorgesehen, daß mit jedem Informationspaket eine Information übertragen wird, die die Zuordnung des Informationspakets zur Endeinheit ermöglicht.

Besonders zweckmäßig ist es, wenn die Mitteilung der Rahmenlänge, der Antwortzeitverzögerung und der maximalen Antwortdauer durch Verschicken einer Nachricht an alle zuhörenden Endeinheiten oder durch Kommunikation mit jeder einzelnen Endeinheit erfolgt.

Um den Energieverbrauch möglichst gering zu halten, ist vorgesehen, daß nach Beendigung des normalen Kommunikationsbetriebs ein Schlafmodus eingeleitet wird, dessen Schlafintervall dem des Endgeräts des Referenzsystems entspricht. Auf diese Weise braucht nur ein einziger Schlafmodus bzw. ein einziges Schlafintervall überwacht zu werden, so daß der hierfür erforderliche Energieverbrauch im wesentlichen dem für die Überwachung des Schlafmodus im Einzelsystem entspricht.

Um sowohl Datenströme mit konstanter Datenrate als auch Datenpakete möglichst zuverlässig und mit geringem Aufwand übertragen zu können, ist erfindungsgemäß vorgesehen, daß jedes Informationspaket ein Datenfeld fester Länge für Steuerdaten und ein Datenfeld variabler Länge für Benutzer- oder Nutzdaten aufweist, wobei die Längeninformation für das Datenfeld variabler Länge im Datenfeld fester Länge übertragen wird und mittels eines im Datenfeld fester Länge übertragenen fehlerkorrigierenden Codes geschützt ist. Durch die Verwendung eines Datenfelds variabler Länge für die Übertragung der Nutzdaten wird für die Übertragung des jeweiligen Bursts oder Informationspakets nur so viel Energie verbraucht, wie unbedingt nötig, da die jeweils sendende Einheit nur so lange sendet, wie es gerade erforderlich ist, während die empfangende Einheit die Empfangsbereitschaft unmittelbar nach dem vollständigen Empfang des Bursts beenden kann. Hierbei stellt der fehlerkorrigierende Code, der im Datenfeld fester Länge übertragen wird, sicher, daß die Empfangsseite stets die Länge des zu empfangenden Bursts kennt.

Um die Zuverlässigkeit der Datenübertragung weiter zu steigern, kann vorgesehen sein, daß auch andere Felder des Datenfelds fester Länge mittels eines in dem Datenfeld fester Länge übertragenen fehlerkorrigierenden Codes geschützt sind.

Die Erfindung wird im folgenden beispielsweise anhand der Zeichnung näher erläutert. Es zeigen:
**Figur 1** ein schematisches Blockschaltbild eines mit einem Referenzsystem kombinierten lokalen Radiokommunikationssystems,
**Figur 2** ein schematisches Blockschaltbild des Aufbaus und der Verbindung der Haupteinheit des Radiokommunikationssystems mit dem Endgerät eines Referenzsystems,
**Figur 3** ein Zeitdiagramm zur Erläuterung der Rahmenstrukturen des Referenzsystems und des lokalen Radiokommunikationssystems,
**Figur 4** ein schematisches Zeitdiagramm zur Erläuterung des Kommunikationsbetriebs innerhalb des Radiokommunikationssystems beim Auftreten einer Verschiebung der Sendeaktivitäten des Referenzsystems,
**Figur 5** ein Zeitdiagramm zur Erläuterung des Kommunikationsbetriebs mit unterschiedlichen Rahmenzeiten für die Endeinheiten des lokalen Radiokommunikationssystems,
**Figur 6** ein Flußdiagramm für den Empfangsbetrieb in einer Endeinheit des lokalen Radiokommunikationssystems, und
**Figur 7** eine schematische Darstellung der Struktur eines Informationspakets oder Bursts.

In den verschiedenen Figuren der Zeichnung sind einander entsprechende Teile und Verfahrensschritte mit gleichen Bezugszeichen versehen.

Das in Figur 1 rein schematisch dargestellte lokale Radiokommunikationssystem 10, dessen Haupteinheit MU im Handapparat HA zusammen mit dem Endgerät 11 eines Referenzsystems, zum Beispiel eines zellularen Mobilfunksystems 12 angeordnet ist, kann beispielsweise als Endeinheit SU eine vom Handapparat HA getrennte Bedienungstastatur sowie als weitere Endeinheit eine ebenfalls vom Handapparat HA getrennte Lautsprecher-Mikrophoneinheit aufweisen. Es ist aber auch denkbar, daß als Endeinheit ein Faxgerät oder ein Personalcomputer PC, ein Laptop oder ein Notebook über eine Luftschnittstelle mit der Haupteinheit MU Daten austauschen, so daß keine aufwendigen Kabel und Steckverbindungen erforderlich sind. Dabei können bei geeigneter Auslegung des Zeitmultiplexbetriebs gleichzeitig eine Vielzahl von Endeinheiten SU mit der Haupteinheit MU Daten austauschen, was mit Hilfe einer Leitungsverbindung nicht möglich wäre, da dann eine Vielzahl von entsprechenden Steckanschlüssen vorgesehen werden müßten, die einer ständig angestrebten Verkleinerung der Handapparate HA entgegenstehen.

Das Endgerät 11 des Referenzsystems, also des zellularen Mobilfunksystems 12, kommuniziert mit der Basisstation BS über einen Kanal 13, wobei sämtliche Aktivitäten in eine Rahmenstruktur eingebettet sind. Wie in Figur 3 dargestellt ist, beträgt beispielsweise bei einem GSM-Rahmen die Rahmenzeit T_{Fr} = 120/26 ms = 4,615 ms. Jeder Rahmen wird dabei in eine Vielzahl von Zeitschlitzen unterteilt, um für jede Abwärtsverbindung (Basisstation BS sendet, Endgerät 11 empfängt) sowie für jede Aufwärtsverbindung (Endgerät 11 sendet, Basisstation BS empfängt) einen reservierten Zeitraum innerhalb eines Rahmens für eine bestimmte Verbindung vorzusehen. Das Endgerät 11 schaltet beispielsweise jeweils im GSM-Zeitschlitz 0 auf Empfang, wie in Figur 3 in der ersten mit Rx bezeichneten Zeile dargestellt ist, während es zunächst Jeweils im GSM-Zeitschlitz 3 sendet.

Die vom Referenzsystem 12 verwendete Rahmenzeit T_{Fr} wird - wie in Figur 2 dargestellt -vom Endgerät 11 in ein Konfigurationsregister 14 übertragen. Gleichzeitig wird auch die Anzahl der Schlafrahmen übernommen, die ein Schlafintervall umfaßt, also die Zelt zwischen zwei aufeinanderfolgenden Empfangsbursts im Schlafmodus. Die Konfigurationsparameter, also die Rahmenzeit t_{Fr} und die Anzahl der Schlafrahmen wird an eine Zeitsteuereinheit 15 übertragen, die über die Leitung RxC einen Empfangspfad 16 und über die Leitung TxC einen Sendepfad 17 steuert. Der Empfangspfad 16 leitet mittels der Antenne 18 empfangene Daten an das Endgerät 11 weiter, während zu sendende Daten über den Sendepfad 17 geführt werden.

Um den Sende- und Empfangsbetrieb der Haupteinheit MU zeitlich so zu legen, daß er den Sendebetrieb des Endgeräts 11 nicht stört und vor allem von diesem nicht gestört wird, überträgt das Endgerät 11 jeweils mit dem Ende eines von ihm ausgesendeten Bursts ein Startsignal S über eine Leitung 19 an die Zeitsteuereinheit 15, die daraufhin die Rahmenzeit t_{Fr} der Haupteinheit MU startet, wie in Figur 3 dargestellt ist. Ebenso wird bei Beginn des Sendebetriebs des Endgeräts ein Stopsignal für die Aktivitäten der Haupteinheit MU über die Leitung 19 gesendet für den Fall, daß es noch nicht abgeschlossene Aktivitäten in der Haupteinheit MU gibt. Somit lassen sich bei Beginn des Sendebetriebs des Endgeräts 11 noch laufende Aktivitäten der Haupteinheit MU entweder zwangsweise beenden oder zumindest als möglicherweise nicht erfolgreich ausgeführt kennzeichnen. Bei der Zuordnung einzelner Abschnitte des MU-Rahmens als Zeitschlitze für die Kommunikation der Haupteinheit MU mit den Endeinheiten SU im Zeitmultiplexbetrieb ist darauf zu achten, daß der letzte Zeitabschnitt NoCom eines MU-Rahmens, der mit dem Sendzeitschlitz des Endgeräts 11 des Referenzsystems 12 zusammenfällt, nicht für Kommunikationsaktivitäten im lokalen Radiokommunkationssystem genutzt wird.

Wechseln für das Endgerät 11 des Referenzsystems 12 die für die Kommunikation mit der Basisstation zugewiesenen Zeitschlitze, wie dies zwischen dem zweiten und dritten GSM-Rahmen in der ersten Zeile in Figur 3 dargestellt ist, so endet der aktuelle Rahmen der Haupteinheit MU nach Ablauf der Rahmenzelt t_{Fr}, während der nächste Rahmen, also der dritte Rahmen in der letzten Zeile von Figur 3 erst nach einer Zeit Δt gestartet wird, da der Sendezeitschlitz Tx des Endgeräts 11 beispielsweise vom GSM-Zeitschlitz 3 auf den GSM-Zeitschlitz 6 gewechselt hat. Δt entspricht dabei dem zeitlichen Abstand zwischen dem alten und dem neuen GSM-Sendezeitschlitz.

Auf diese Weise läßt sich die zeitliche Lage der MU- Rahmen der Haupteinheit MU des lokalen Radiokommunikationssystems 10 stets so an die Zeitbasis des Referenzsystems anpassen, daß alle Aktivitäten der Haupteinheit MU sich immer an derselben zeitlichen Position relativ zu den Aktivitäten des Referenzsystems 12 abspielen. Obwohl hier die Rahmenzeit t_{Fr} des MU-Rahmens der Haupteinheit MU als gleichlang mit dem GSM-Rahmen dargestellt ist, ist es möglich, für die Rahmenzeit t_{Fr} ganzzahlige Vielfache oder Bruchteile der Rahmenzeit des Referenzsystems zu verwenden.

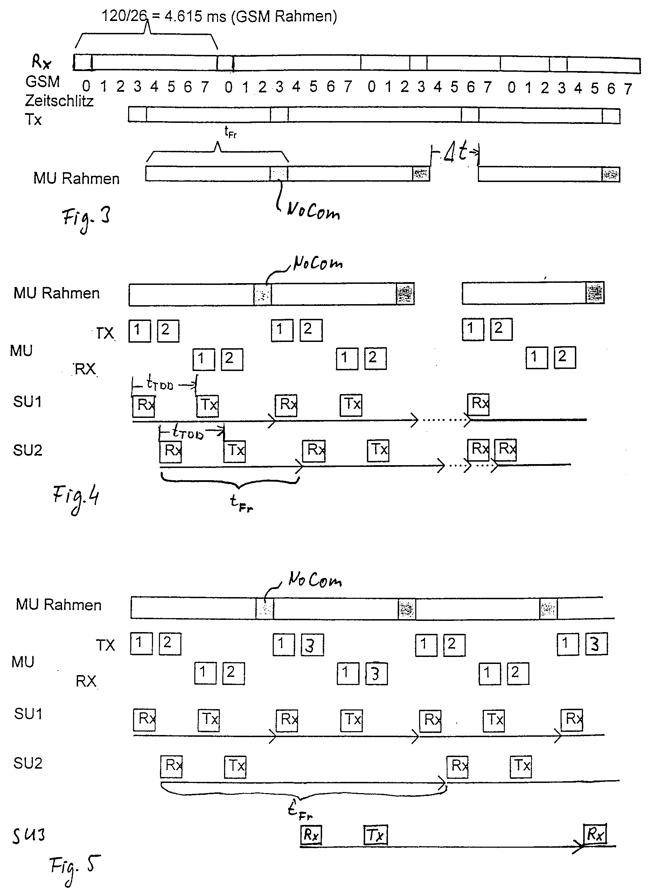

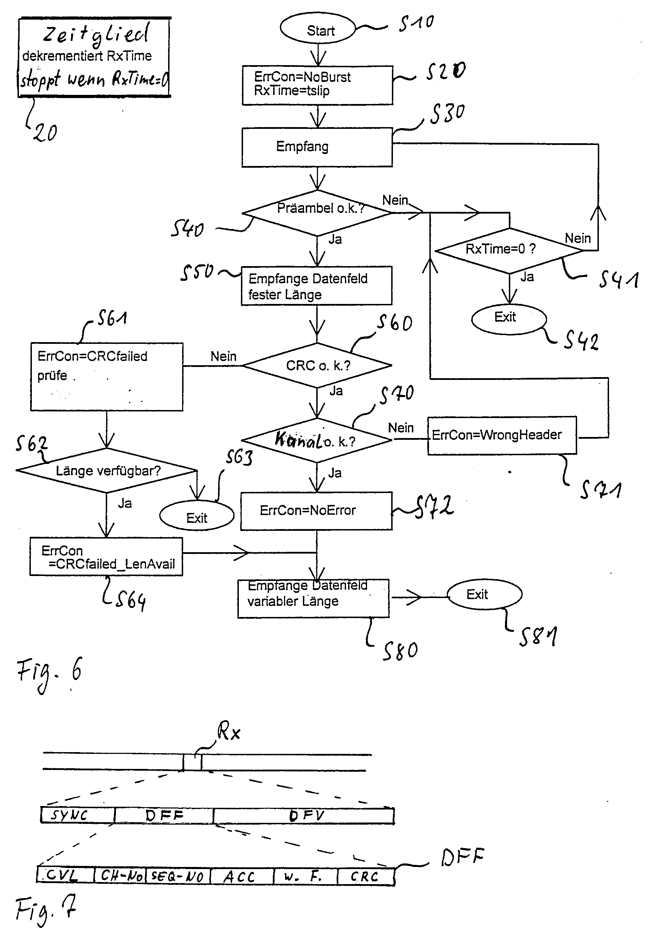

Wie in Figur 4 schematisch angedeutet ist, erfolgt die Kommunikation der Haupteinheit MU mit beispielsweise zwei Endeinheiten SU1 und SU2 in der Weise, daß der Endeinheit SU1 ein Sendezeitschlitz TX1 und der Endeinheit SU2 ein Sendezeitschlitz TX2 der Haupteinheit MU zugeordnet ist. Nach Ablauf einer vorgegebenen Antwortverzögerungszeit t_{TDD} oder Sendeverzögerung sendet die erste Endeinheit SU1, so daß die Haupteinheit MU den Burst von der ersten Endeinheit SU1 während des Empfangszeitschlitzes RX1 empfängt. Die zweite Endeinheit sendet nach Ablauf derselben Sendeverzögerungszeit t_{TDD}, so daß die Haupteinheit MU während des Empfangszeitschlitzes RX2 das Signalpaket von der zweiten Endeinheit SU2 empfängt. Hierbei ist zu berücksichtigen, daß jede Endeinheit SU die ihr jeweils zugeordnete Rahmenzeit t_{Fr} mit dem Empfang eines Bursts von der Haupteinheit MU startet. Somit reicht eine Sendeverzögerungszeit für alle Endeinheiten SU aus, um sicherzustellen, daß die im Zeitduplexverfahren mit der Haupteinheit MU kommunizierenden Endeinheiten SU sich nicht gegenseitig stören.

Weist das lokale Radiokommunikationssystem 10 Endeinheiten SU1, SU2, SU3 auf, die ein unterschiedlich hohes Datenaufkommen besitzen, so kann beispielsweise wie in Figur 5 dargestellt, für die erste Endeinheit SU1 eine Rahmenzeit t_{Fr} festgelegt werden, die gleich der Rahmenzeit des MU-Rahmens der Haupteinheit MU ist. Für die beiden anderen Endeinheiten SU2 und SU3 wurden hier beispielsweise Rahmenzeiten t_{Fr} vorgesehen, die doppelt so lang sind, wie die Rahmenzeit t_{Fr} des MU-Rahmens.

Während des ersten Rahmens kommuniziert die Haupteinheit, wie anhand von Figur 4 beschrieben, mit den Endeinheiten SU1 und SU2. Während des zweiten Rahmens erfolgt mit der Endeinheit SU1 der Datenaustausch ebenso wie vorher, da der erste Sendezeitschlitz TX1 und der erste Empfangszeitschlitz RX1 für die erste Endeinheit SU1 reserviert ist. Der zweite Sendezeitschlitz TX2 und der zweite Empfangszeitschlitz RX2 sind im ersten Rahmen und im dargestellten Ausführungsbeispiel in allen weiteren ungeraden Rahmen der zweiten Endeinheit SU2 zugeordnet während sie während des zweiten Rahmens und allen folgenden gradzahligen Rahmen für die dritte Endeinheit SU3 reserviert sind. Um hierbei die zeitliche Abstimmung zwischen der Haupteinheit MU und den Endeinheiten SU1, SU2, SU3 zu gewährleisten, braucht jeder Endeinheit nur ihre entsprechende Rahmenzeit t_{Fr}, t'_{Fr} mitgeteilt zu werden, während die Sendeverzögerungszeit t_{TDD} für jede Endeinheit SU gleichbleibt.

Je nach Anzahl der Endeinheiten und deren jeweiligen Datenaufkommen können zusätzlich zu oder anstatt der unterschiedlichen Rahmenzeiten für die Endeinheiten auch die Längen der Zeitschlitze variiert werden. Dabei steht zweckmäßigerweise die Zeitschlitzdauer in einem festen Verhältnis zur Zeitbasis der Haupteinheit MU.

Tritt im Referenzsystem ein Zeitversatz Δt auf, wechselt also beispielsweise der dem Endgerät 11 zugeordnete Zeitschlitz, so endet der in Figur 4 jeweils zweite Rahmen der Endeinheit SU1 und der Endeinheit SU2 zu einem Zeitpunkt, zu dem der dritte Rahmen der Haupteinheit MU noch nicht begonnen hat. Jede Endeinheit SU des lokalen Radiokommunikationssystems 10 erwartet jedoch nach Ablauf eines Rahmens den Empfang eines für sie bestimmten Signalpakets Rx. Daher geht Jede Endeinheit in einen Empfangsbereitschaftszustand über und prüft beim Empfang eines Burst, ob dieser für sie bestimmt ist. Wie in Figur 4 dargestellt, wird also der nach Ablauf des Zeitversatzes Δt für die erste Endeinheit SU1 von der Haupteinheit MU ausgesandte Burst sowohl von der ersten also auch der zweiten Endeinheit SU1, SU2 empfangen. Die erste Endeinheit SU1 erkennt dabei aufgrund entsprechender Informationen im Burst, daß dieser für sie bestimmt ist, während die zweite Endeinheit SU2 in entsprechender Weise feststellt, daß dieser Burst nicht für sie bestimmt ist. Die erste Endeinheit SU1 startet somit den entsprechenden Rahmen und ist wieder mit dem Zeitablauf der Haupteinheit MU synchronisiert. Wenn als nächstes im Sendezeitschlitz TX2 der Burst Rx für die zweite Endeinheit SU2 ausgesendet wird, ist nur noch die zweite Endeinheit in Empfangsbereitschaft, die dann durch den Empfang des für sie bestimmten Bursts Rx ebenfalls wieder mit dem Zeitablauf der Haupteinheit MU synchronisiert ist.

Um zu verhindern, daß eine Endeinheit SU ständig in Empfangsbereitschaft ist, wird die Empfangsbereitschaft nur so lange aufrechterhalten, bis eine für den Zeitversatz Δt festgelegte Maximalzeit tₛₗᵢₚ abgelaufen ist, nach der die Endeinheit die Empfangsbereitschaft beendet.

Anhand von Figur 6 wird nun der Empfangsbetrieb in einer Endeinheit SU erläutert. Nach Ablauf einer Rahmenzeit t_{Fr} wird im Schritt S10 der Empfangsbetrieb gestartet. Im Schritt S20 wird dann eine Fehlererkennungsvariable ErrCon auf einen Wert NoBurst gesetzt, der anzeigt, daß kein Burst bzw. kein Signalpaket empfangen wurde. Außerdem wird die Empfangsbereitschaftszelt RxTime eines Zeltglieds 20 auf tₛₗᵢₚ gesetzt. Das Zeitglied 20 dekrementiert dabei die Variable RxTime und stoppt, wenn RxTime gleich Null ist.

Anschließend geht die Endeinheit S30 auf Empfang und prüft dann im Schritt S40, ob die Präambel des Signalpakets in Ordnung ist. Ist dies nicht der Fall, so wird im Schritt S41 überprüft, ob die Empfangsbereitschaftszeit abgelaufen ist, was dann der Fall ist, wenn die Variable RxTime gleich Null ist. Ist die Empfangsbereitschaftszeit noch nicht abgelaufen, so wird im Schritt S30 der Empfang fortgesetzt, während nach Ablauf der Empfangsbereitschaftszeit die Empfangsbereitschaft im Schritt S42 beendet wird, wobei die Fehlererkennungsvariable anzeigt, daß kein Signalpaket empfangen wurde.

Istjedoch die Präambel des Signalpakets in Ordnung, so wird zunächst ein Datenfeld DFF (siehe Figur 7) fester Länge im Schritt S50 empfangen. Nach Abschluß des Empfangs dieses Datenfelds DFF wird im Schritt S60 ein Übertragungsfehlererkennungscode CRC überprüft, um festzustellen, ob der Datenempfang fehlerfrei erfolgt ist. Ist dies der Fall, wird im Schritt S70 überprüft, ob das Signalpaket für die empfangende Endeinheit SU bestimmt ist. Diese Überprüfung im Schritt S70 kann beispielsweise anhand der Endeinheit SU zugewiesenen Kanalnummer CH-NO überprüft werden. Ist das Signalpaket nicht für die empfangende Endeinheit SU bestimmt, so wird im Schritt S71 die Fehlererkennungsvariable ErrCon auf einen Wert WrongHeader gesetzt, der anzeigt, daß zwar ein Burst empfangen wurde, daß aber der Burst nicht für die empfangende Endeinheit SU bestimmt war. Anschließend wird dann im Schritt S41 überprüft, ob die maximale Empfangsbereitschaftszeit bereits abgelaufen ist. Falls dies nicht der Fall ist, wird im Schritt S30 der normale Empfangsbetrieb fortgesetzt. Der hier beschriebene Empfang eines falschen Signalpakets entspricht dabei dem anhand von Figur 4 erläuterten Empfang des Signalpakets für die erste Endeinheit SU1 durch die zweite Endeinheit SU2.

Zeigt sich im Schritt S70, daß nicht nur ein Burst oder Signalpaket fehlerfrei empfangen wurde, sondern auch für die empfangende Endeinheit SU bestimmt ist, so wird im Schritt S72 der Fehlercode ErrCon auf einen Wert NoError gesetzt, der anzeigt, daß der Empfang fehlerfrei war. Daraufhin wird das die Nutzdaten enthaltende Datenfeld DFV variabler Länge im Schritt S80 empfangen. Anschließend wird die Empfangsroutine im Schritt S81 verlassen.

Wird im Schritt S60 jedoch festgestellt, daß der Übertragungsfehlererkennungscode CRC nicht in Ordnung ist, so wird im Schritt S61 zunächst die Fehlererkennungsvariable ErrCon auf einen entsprechenden Wert CRCfailed gesetzt, um dann einen Längencode CVL auf Fehler zu überprüfen. Anschließend wird im Schritt S62 festgestellt, ob die Länge des Datenfelds DFV variabler Länge verfügbar ist. Falls dies nicht der Fall ist, wird die Empfangsroutine im Schritt S63 verlassen. Ist jedoch die Länge verfügbar, so wird im Schritt S64 die Fehlererkennungsvariable ErrCon auf einen Wert CRCfailed_LenAvail gesetzt, der anzeigt, daß zwar die Daten des Datenfelds fester Länge fehlerbehaftet sind, daß aber die erforderlichen Informationen für den Empfang des Datenfelds DVF variabler Länge, nämlich die aktuelle Länge dieses Feldes verfügbar ist, so daß im Schritt S80 das Datenfeld variabler Länge empfangen werden kann.

Falls der Übertragungsfehlererkennungscode CRC einen Übertragungsfehler im Datenfeld fester Länge anzeigt, so kann zwar nicht überprüft werden, ob das empfangene Signalpaket der empfangenden Endeinheit SU zugeordnet ist oder nicht. Da jedoch davon ausgegangen werden kann, daß es wahrscheinlicher ist, daß ein Übertragungsfehler aufgetreten ist als daß ein falsches Signalpaket empfangen wurde, läßt sich auf diese Weise der gleichmäßige Datenaustausch aufrechterhalten. Selbst wenn, wie beispielsweise in der letzten Zeile in Figur 4 dargestellt ist, beim Empfang des Signalpakets für die erste Endeinheit die empfangende zweite Endeinheit den empfangenden Burst infolge eines fehlerhaften Übertragungsfehlererkennungscodes CRC als eigenes Signalpaket akzeptiert, so wird dieser Fehler beim nächsten Empfang, bei dem der Übertragungsfehlererkennungscode CRC in Ordnung ist, berichtigt, da dann im Schritt S70 die falsche Kanalnummer erkannt wird und durch die Fortsetzung des Empfangsbetriebs im Schritt S30 auf das richtige Signalpaket gewartet wird.

Wie in Figur 7 rein schematisch dargestellt ist, weist der mit niedriger Sendeleistung ausgesendete Abwärtsburst eine hinreichend lange Präambel SYNC auf, die zur Synchronisation der empfangenden Endeinheit dient und die den ständigen Suchvorgang der Endeinheit während der Empfangsbereitschaftszeit ermöglicht. Für einen Aufwärtsburst kann diese Präambel SYNC kürzer sein, da ein entsprechender Aufwärtsburst immer nach einer festen Duplex- oder Sendeverzögerungszeit ausgesendet und empfangen wird.

An die Präambel SYNC schließt sich dann das Datenfeld DFF fester Länge an, dem das Datenfeld variabler Länge DFV folgt, das die Nutzinformation beinhaltet. Zusätzlich zu den Nutzdaten können aber auch Sicherungsdaten, wie beispielsweise ein weiterer Übertragungsfehlererkennungscode CRC darin vorgesehen sein.

Bei der Abwärtsverbindung enthält das Datenfeld DFF fester Länge neben dem Übertragungsfehlererkennungscode CRC vor allen Dingen die im jeweiligen Burst oder Signalpaket verwendete Länge als codierte Längeninformation CVL, die Kanalnummer CH-NO, die Sequenznummer SEQ-NO, die einen expliziten Zähler für den jeweiligen Rahmen darstellt sowie beispielsweise ein Feld ACC zur Übertragung von Kontrollinformationen zwischen Haupt- und Endeinheit sowie je nach Bedarfweitere Felder. Die codierte variable Länge CVL umfaßt neben der variablen Länge des Datenfelds DFV mit variabler Länge einen fehlerkorrigierenden Code, so daß auch im Falle fehlerhafter Bits die Länge noch decodiert werden kann.

Die Verwendung eines Datenfelds variabler Länge im Informationspaket ermöglicht es, sowohl Datenströme mit konstanter Datenrate als auch Datenpakete zuverlässig mit möglichst geringem Energieaufwand zu übertragen.

Die vorliegende Erfindung stellt also eine flexible Rahmenstruktur bereit, die variable Rahmen- und Zeitschlitzlängen zuläßt sowie eine variable Anzahlvon Zeitschlitzen pro Rahmen. Durch die Übernahme der Zeitbasis eines Referenzsystems als eigene Zeitbasis für die Haupteinheit eines lokalen Radiokommunikationssystems und durch die Synchronisierung der Zeitbasis mit dem Sendebetrieb des Endgeräts des Referenzsystems wird erreicht, daß die Rahmenstruktur im lokalen Radiokommunikationssystem weitgehend frei gewählt werden kann, ohne daß es zu wechselseitigen Störungen der Systeme kommt. Somit brauchen auch keine schaltungstechnischen Vorkehrungen zur Verhinderung von gegenseitigen Störungen getroffen zu werden.

## Patentansprüche

1. Verfahren zum Steuern der Sende- und Empfangsaktivitäten eines lokalen Radiokommunikationssystems mit einer Haupteinheit (MU) und wenigstens einer Endeinheit (SU), bei dem in der Haupteinheit (MU) eine Zeitbasis für eine Kommunikation mit der bzw. den Endeinheiten (SU) festgelegt und Jeder Endeinheit (SU) die für sie auf der Grundlage dieser Zeitbasis festgelegte Rahmenzeit (t_{Fr}) mitgeteilt wird.

2. Verfahren nach Anspruch 1, **dadurch gekennzeichnet,** daß zur Anpassung der Sende- und Empfangsaktivitäten des Radiokommunikationssystems (10) an ein Referenzsystem (12) die Zeitbasis des lokalen Radiokommunikationssystems (10) von der Zeitbasis des Referenzsystems (12) abgeleitet wird.

3. Verfahren nach Anspruch 2, **dadurch gekennzeichnet,** daß die Haupteinheit (MU) einem Endgerät (11) des Referenzsystems (12) zugeordnet ist, und daß die Zeitbasis der Haupteinheit (MU) mit der Sendeaktivität des Endgeräts (11) korreliert.

4. Verfahren nach Anspruch 2 oder 3, **dadurch gekennzeichnet,** daß eine Rahmenzeit (T_{Fr}) des Referenzsystems (12) als Zeitbasis für das lokale Radiokommunikationssystem (10) verwendet wird, und daß die Rahmenzeit (t_{Fr}) für jede Endeinheit (SU) in einem ganzzahligen Verhältnis zur Zeitbasis steht.

5. Verfahren nach einem der vorstehenden Ansprüche, **dadurch gekennzeichnet,** daß in jeder Endeinheit (SU) die Rahmenzeit (t_{Fr}) jeweils vom Beginn eines empfangenen Informationspakets an gemessen wird.

6. Verfahren nach einem der vorstehenden Ansprüche, **dadurch gekennzeichnet,** daß während eines normalen Kommunikationsbetriebs jede Endeinheit (SU) jeweils am Ende eines Rahmens in Empfangsbereitschaft übergeht.

7. Verfahren nach Anspruch 6, **dadurch gekennzeichnet,** daß jede Endeinheit (SU) so lange in Empfangsbereitschaft bleibt, bis sie entweder ein für sie bestimmtes Informationspaket empfängt oder bis eine für die maximale Dauer der Empfangsbereitschaft vorgegebene Zeit (tₛₗᵢₚ) abgelaufen ist.

8. Verfahren nach Anspruch 7, **dadurch gekennzeichnet,** daß die für die maximale Dauer der Empfangsbereitschaft vorgegebene Zeit (tₛₗᵢₚ) in Abhängigkeit von der Rahmenzeit (T_{Fr}) des Referenzsystems (12) festgelegt ist.

9. Verfahren nach einem der vorstehenden Ansprüche, **dadurch gekennzeichnet,** daß mit Jedem Informationspaket eine Information (CH-NO) übertragen wird, die die Zuordnung des Informationspakets zur Endeinheit (SU) ermöglicht.

10. Verfahren nach einem der vorstehenden Ansprüche, **dadurch gekennzeichnet,** daß die Mitteilung der Rahmenzeit (t_{FR}), der Antwortzeitverzögerung (t_{TDD}) und der maximalen Antwortdauer durch Verschicken einer Nachricht an alle zuhörenden Endeinheiten (SU) oder durch Kommunikation mit jeder einzelnen Endeinheit (SU) erfolgt.

11. Verfahren nach einem der vorstehenden Ansprüche, **dadurch gekennzeichnet,** daß nach Beendigung des normalen Kommunikationsbetriebs ein Schlafmodus eingeleitet wird, dessen Schlafintervall dem des Endgeräts (11) des Referenzsystems (12) entspricht.

12. Verfahren nach einem der vorstehenden Ansprüche, **dadurch gekennzeichnet,** daß jedes Informationspaket ein Datenfeld (DFF) fester Länge für Steuerdaten und ein Datenfeld (DFV) variabler Länge für Benutzer- oder Nutzdaten aufweist, wobei die Längeninformation (VL) für das Datenfeld variabler Länge im Datenfeld (DFF) fester Länge übertragen wird.

13. Verfahren nach Anspruch 12, **dadurch gekennzeichnet,** daß die Längeninformation (VL) mittels eines im Datenfeld fester Länge übertragenen fehlerkorrigierenden Codes geschützt ist.

14. Verfahren nach Anspruch 12 oder 13, **dadurch gekennzeichnet,** daß auch andere Felder des Datenfelds (DFF) fester Länge mittels eines im Datenfeld (DFF) fester Länge übertragenen fehlerkorrigierenden Codes geschützt sind.
